# EUROPEAN PATENT SPECIFICATION

(11) **EP 1 871 182 B1**
(45) Date of publication and mention of the grant of the patent: **20.04.2011**
(21) Application number: 06737520.4
(22) Date of filing: 08.03.2006
(51) Int. Cl.: A23L 1/29

(54) **CONCENTRATED LIQUID HUMAN MILK FORTIFIER (HMF)**
KONZENTRIERTES FLÜSSIGES MITTEL ZUM ANREICHERN VON HUMANMILCH
FORTIFIANT POUR LAIT HUMAIN (HMF) LIQUIDE CONCENTRE

(30) Priority: 09.03.2005 US 660087 P
(43) Date of publication of application: 02.01.2008
(73) Proprietor: ABBOTT LABORATORIES, Abbott Park IL 60064-3500 (US)
(72) Inventor: BARRETT-REIS, Bridget, Dublin, Ohio 43017 (US); MAZER, Terry, New Albany, Ohio 43054 (US); BLACK, Cynthia, Westerville, Ohio 43081 (US)
(74) Representative: Modiano, Micaela Nadia
(86) International application number: PCT/US2006/008354
(87) International publication number: WO 2006/099013

(56) References cited:
- WO-A-2004/032651
- WO-A-2005/051088
- WO-A-2005/122790
- US-A1- 2001 029 267
- US-A1- 2003 021 868
- US-A1- 2003 175 358
- VAN ACKER JOS ET AL: "Outbreak of necrotizing enterocolitis associated with Enterobacter sakazakii in powdered milk formula" JOURNAL OF CLINICAL MICROBIOLOGY, vol. 39, no. 1, January 2001 (2001-01), pages 293-297, XP002389533 ISSN: 0095-1137
- MOYER-MILEUR L ET AL: "EVALUATION OF LIQUID OR POWDERED FORTIFICATION OF HUMAN MILK ON GROWTH AND BONE MINERALIZATION STATUS OF PRETERM INFANTS" JOURNAL OF PEDIATRIC GASTROENTEROLOGY AND NUTRITION, RAVEN PRESS, NEW YORK, NY, US, vol. 15, no. 4, 1992, pages 370-374, XP000933692 ISSN: 0277-2116
- ROSS, ABBOTT LABORATORIES: "Similac Natural Care Advance, Low Iron Human Fortifier (HMF)"[Online] XP002389553 Retrieved from the Internet: URL:http://rpdcon40.ross.com/pn/PediatricP roducts.NSF/web_Ross.com_XML_PediatricNutr ition/20CB14E07C70552785256A8000754761?Ope nDocument> [retrieved on 2006-07-04]

## Description

### TECHNICAL FIELD

The present invention relates to concentrated human milk fortifier liquids for use in combination with human milk or other infant feeding compositions, especially in those compositions administered to preterm infants in neonatal intensive care units or other similar institutional settings.

### BACKGROUND OF THE INVENTION

Human milk is generally recognized as an ideal feeding for most infants due to its overall nutritional composition. It is well known and generally accepted that human milk provides infants with unique immunologic and developmental benefits unequaled by commercial infant formulas.

For some infants, however, especially preterm infants, human milk does not always meet their complete nutritional needs. Although these infants still benefit from human milk, it is often desirable to supplement their human milk feedings with additional nutrients. Initially, these preterm infants grow more rapidly than many of their term counterparts, so that their accelerated growth often requires additional nutrition made possible by the use of a human milk fortifier in combination with human milk.

Human milk fortifiers are commercially available as unit dose powders that can be added to human milk prior to feeding. Examples of such fortifiers include Similac ® Human Milk Fortifier ®, available from Ross Products Division, Abbott Laboratories, Columbus, Ohio, and Enfamil ® Human Milk Fortifier Powder, available from Mead Johnson, Evansville, Indiana. Both products are unit dose powders that are added to about 25 mI of human milk prior to feeding, and both are most typically used in combination with human milk for preterm infants in neonatal intensive care units.

Most of the human milk fortifiers described in the literature are formulated as reconstitutable powders rather than liquids, to thus minimize the volume displacement of human milk by the fortifier. Powders will almost always displace less human milk than The nutritionally corresponding fortifier liquid. Human milk fortifier powders are described, for example, in U.S. Patent 6,294,206 (Barrett-Reis et al.), U.S. Patent 6,472,003 (Barrett-Reis et al.), WO 2003065816 (Euber et al.),

U.S. Patent Application No. 2003/021868 A1 describes a powdered human milk fortifier, comprising a protein component and a fat component, that may be provided in a unit dose container, and methods of providing nutrition to preterm infants using the fortifier powder.

WO 2004/032651 A1 describes infant formula compositions comprising the nucleotides cytidine monophosphate, guanosine monophosphate, adenosine monophosphate, uridine monophosphate, and inosine monophosphate.

U.S. Patent Application No. 2001/0029267 A1 describes an infant formula containing a lipid blend that softens firm stools associated with typical infant formula.

U.S. Patent Application No. 2003/0172358 A1 describes a nutritional supplement for human milk to feed premature infants comprising protein, fat, and carbohydrates. The carbohydrate content is limited to no more than about 10% dry weight of the nutritional supplement and the fat content is at least about 35% dry weight. The supplement can be in powder or liquid form.

Van Acker, et al., "Outbreak of Necrotizing Enterocolitis Associated with Enterobacter sakazakii in Powdered Milk Formula," 2001 Journal of Clinical Microbiology, Vol. 39, No. 1, p. 293-297, describes an outbreak of necrotizing enterocolitis in a neonatal intensive care unit of a hospital. Van Acker, et al. conclude that there was a strong, if not causal, relationship between intrinsic contamination of powdered milk formula with *Enterobacter sakazakii* and the development of necrotizing enterocolitis.

Moyer-Mileur, et al., "Evaluation of Liquid or Powdered Fortification of Human Milk on Growth and Bone Mineralization Status of Preterm Infants," 1992 Journal of Pediatric Gastroenterology and Nutrition, Vol. 15, p. 370-374, describes a study of preterm infants fed preterm human milk supplemented with either powdered fortifier or liquid supplement Moyer-Mileur, et al. conclude that products used to enrich preterm human milk are adequate to meet the growth needs of the preterm infant, but that infants fed the powdered fortified preterm human milk had higher bone mineralization than those fed the liquid supplemented human milk.

The present invention is thus directed to a human milk fortifier in the form of a concentrated liquid, which provides minimum volume displacement of human milk while at the same time eliminating the use of a powder fortifier formulation within the neonatal intensive care unit. It is believed that the use of the concentrated liquid of the present invention within these institutions may reduce the risk of microbial contamination associated with the preparation of an infant feeding.

### SUMMARY OF THE INVENTION

The present invention relates to concentrated, liquid, human milk fortifier compositions having a caloric density of from 1.25 kcal/ml to 6.0 kcal/ml, and comprising fat, carbohydrate, and from 15% to 45% by weight of protein, on a dry weight basis, wherein the concentrated liquid is intended to be added to human milk in a volume-volume ratio of from 1:3 to 1:9. The compositions are especially useful for providing nutrition to preterm infants in neonatal intensive care units or in similar other institutional settings.

The present invention includes aseptically packaged embodiments for improved stability, wherein the embodiments comprise, on a dry weight basis, from 15% to 45% protein, from 19% to about 41% fat, and from 14% to 59% carbohydrate, wherein the composition is an aseptically packaged liquid.

The present invention also includes retort-packaged embodiments having improved stability. These packaged retort compositions comprise, on a dry weight basis, from about 15% to 45% protein, from 19% to 41% fat, and from 14% to 59% carbohydrate. The protein component includes from about 30% to 50% by weight of whey protein and from 50% to 70% by weight of casein protein.

The present invention also includes calcium-fortified embodiments of the present invention, also having improved physical or storage stability. These embodiments comprise, on a dry weight basis, from 15% to 45% by weight of protein, from 19% to

41% by weight of fat, from 14% to 59% by weight of carbohydrate, and a calcium source that provides from 50% to 100% by weight of the total calcium and has a water or product solubility of less than 0.1 g/ml at 32°C.

The present invention is also directed to the use as defined in claims 18-22.

This use is especially useful as applied to the feeding of preterm or low birthweight infants in neonatal intensive care units or other similar institutional setting.

The concentrated liquid, human milk fortifier of the present invention provides minimal volume displacement of human milk while at the same time reduces the use of a powder fortifier formulation within the neonatal intensive care unit. It is believed that the use of the concentrated liquid of the present invention within these institutions may reduce the risk of microbial contamination associated with the preparation of infant feedings. The compositions also remain surprisingly stable despite concentrated caloric and high solids content.

### DETAILED DESCRIPTION OF THE INVENTION

The human milk fortifier compositions of the present invention comprise fat, protein, and carbohydrates in a stable, concentrated, liquid form with a defined caloric density. Other essential or optional characteristics of the human milk fortifiers of the present invention are described in greater detail hereinafter.

The term "retort packaging" and "retort sterilizing" are used interchangeably herein, and unless otherwise specified, refer to the common practice of filling a container, most typically a metal can or other similar package, with a nutritional liquid and then subjecting the liquid-filled package to the necessary heat sterilization step, to form a sterilized, retort packaged, nutritional liquid product.

The term "aseptic packaging" as used herein, unless otherwise specified, refers to the manufacture of a packaged product without reliance upon the above-described retort packaging step, wherein the nutritional liquid and package are sterilized separately prior to filling, and then are combined under sterilized or aseptic processing conditions to form a sterilized, aseptically packaged, nutritional liquid product.

The term "infant" as used herein, refers generally to individuals less than about 1 year of age, actual or corrected.

The term "preterm" are used herein refers to those infants born at less than 37 weeks gestation, have a birth weight of less than 2500 gm, or both.

The terms "fortifier solids" or "total solids", unless otherwise specified, are used interchangeably herein and refer to all material components of the compositions of the present invention, less water.

The term "lipid" as used herein, unless otherwise specified, means fats, oils, or combinations thereof.

The term "human milk fortifier" as used herein, unless otherwise specified, refers to nutritional compositions for use in combination and admixture with human milk or an infant nutritional formula, preferably human milk. Unless otherwise specified, the term "human milk fortifier" specifically excludes conventional infant formulas that provide the sole or primary source of infant nutrition and are not typically combined and admixed with human milk to supplement human milk feedings. The human milk fortifier of the present invention preferably excludes those compositions derived from concentrated or otherwise modified natural human milk.

All percentages, parts and ratios as used herein are by weight of the total composition, unless otherwise specified. All such weights as they pertain to listed ingredients are based on the active level and, therefore, do not include solvents or by-products that may be included in commercially available materials, unless otherwise specified.

All references to singular characteristics or limitations of the present invention, as used herein, shall include the corresponding plural characteristic or limitation, and vice versa, unless otherwise specified or clearly implied to the contrary by the context in which the reference is made.

All combinations of method or process steps, as used herein, may be performed in any order, unless otherwise specified or clearly implied to the contrary by the context in which the referenced combination is made.

The compositions of the present invention, including the many embodiments described herein, can comprise, consist of, or consist essentially of the essential elements and limitations of the invention described herein, as well as any additional or optional ingredients, components, or limitations described herein or otherwise useful in infant nutrition applications.

### I. Macronutrients

The concentrated human milk fortifier of the present invention comprises carbohydrate, fat, and protein macronutrients of sufficient types and amounts, that when used in combination with human milk or other infant feeding formula, help meet the nutritional needs of the infant, especially the premature infant. The concentration of these macronutrients in the various embodiments of the present invention includes the ranges described hereinafter.

### Protein

The liquid concentrates of the present invention comprise a protein suitable for use in infants, especially preterm infants, at concentrations ranging from 15% to 45%, including from 20% to 35%, and also including from 28% to 33%, on a dry weight basis.

One aspect of the invention relates to those liquid concentrates prepared by retort processing, which comprise the requisite protein concentrations with a blend of casein and whey protein. The blend comprises from 20% to 45% by weight of whey protein, including from 28% to 39% whey protein, in combination with 55% to

80% by weight of casein protein, including from 61% to 72% by weight of casein protein. It has been found that these particular blends provide improved stability for a liquid retort concentrate.

Yet another aspect of the invention relates to those liquid concentrates prepared by aseptic processing, which comprise the requisite protein concentrations and the selection of any protein suitable for use in the targeted infant population. The liquid concentrates can be formulated with improved stability, with a much broader range of selected protein types, provided that the concentrate is prepared by aseptic rather than retort processing.

Yet another aspect of the present invention relates to those liquid concentrates prepared by any convention or otherwise known processing method, which also comprise the requisite protein concentration except that the protein component comprises up to 100% by weight of hydrolyzed protein. These protein hydrolysate embodiments of the liquid concentrates of the present invention may often be formulated at higher caloric densities. Non-limiting examples of suitable protein hydrolysates for use herein include soy protein hydrolysate, casein protein hydrolysate, whey protein hydrolysate, rice protein hydrolysate, potato protein hydrolysate, fish protein hydrolysate, egg albumen hydrolysate, gelatin protein hydrolysate, combinations of animal and vegetable protein hydrolysates, and combinations thereof.

In this context, the terms "protein hydrolysates" or "hydrolyzed protein" are used interchangeably herein and include extensively hydrolyzed proteins, wherein the degree of hydrolysis is at least 10%, most often at least 20%, including from 20% to 80%, and also including from 30% to 80%, even more preferably from 40% to 60%. The degree of hydrolysis is the extent to which peptide bonds are broken by a hydrolysis method. The degree of protein hydrolysis for purposes of characterizing the extensively hydrolyzed protein component of these embodiments is easily determine by one of ordinary skill in the formulation arts by quantifying the amino nitrogen to total nitrogen ratio (AN/TN) of the protein component of the selected formulation. The amino nitrogen component is quantified by USP titration methods for determining amino nitrogen content, while the total nitrogen component is determined by the Tecator Kjeldahl method, all of which are well known methods to one of ordinary skill in the analytical chemistry art

Depending upon the selected embodiment of the present invention, the proteins suitable for use in the liquid concentrates may therefore include intact or hydrolyzed proteins, free amino acids, or combinations thereof. Non-limiting examples of suitable proteins include hydrolyzed, partially hydrolyzed or non-hydrolyzed protein, and can be derived from any known or otherwise suitable source such as milk (e.g., casein, whey, lactose-free milk protein isolates), animal (e.g., meat, fish), cereal (e.g., rice, corn), vegetable (e.g., soy), or combinations thereof. The protein can include, or be entirely or partially replaced by, free amino acids known or otherwise suitable for use in nutritional products, non-limiting examples of which include Non-limiting examples of free amino acids include L-alanine, L-arginine, L-asparagine, L-aspartic acid, L-carnitine, L-cystine, L-glutamic acid, L-glutamine, glycine, L-histidine, L-isoleucine, L-leucine, L-lysine, L-methionine, L-phenylalanine, L-proline, L-serine, L-taurine, L-threonine, L-tryptophan, L-tyrosine, L-valine, and combinations thereof.

### Carbohydrate

The liquid concentrates of the present invention comprise a carbohydrate suitable for use in infants, especially preterm infants, at concentrations most typically ranging up to 75% by weight on a dry weight basis, including from 10% to 50%, and also including from 20% to 40%, by weight on a dry weight basis.

Carbohydrates suitable for use in the liquid concentrates of the present invention may include hydrolyzed or intact, naturally and/or chemically modified, starches sourced from corn, tapioca, rice or potato, in waxy or non-waxy forms. Other non-limiting examples of suitable carbohydrate sources include hydrolyzed cornstarch, maltodextrin (i.e. non-sweet, nutritive polysaccharide having a DE value less than 20), glucose polymers, sucrose, corn syrup, corn syrup solids (i.e., polysaccharide having a DE value greater than 20), glucose, rice syrup, fructose, high fructose corn syrup, indigestible oligosaccharides such as fructooligosaccharides (FOS), and combinations thereof. The carbohydrates may comprise lactose or can be substantially free of lactose.

One aspect of the present invention includes a non-reducing carbohydrate component, which may represent from 80% to 100%, and also including 100%, by weight of the total carbohydrate in the liquid concentrate. The selection of a non-reducing carbohydrate enhances product stability within the liquid concentrate and is generally better tolerated by infantes, especially premature infants. Non-limiting examples of non-reducing carbohydrares include sucrose or other carbohydrate that does not readily oxidize or react with Tollen's, Benedict's, or Fehling's reagents. The present invention therefore includes those embodiments comprising a carbohydrate component, wherein the carbohydrate component comprises a mono- and/or disaccharide such that at least 50%, including from 80% to 100%, and also including 100%, of the mono- and/or disaccharide is a non-reducing carbohydrate.

### Fat

The liquid concentrates of the present invention also comprise a fat component suitable for use in infants, especially preterm infants, at concentrations most typically ranging up to 40% by weight on a dry weight basis, including from 10% to 40%, and also including from 15% to 37%, and also including from 18% to 30%, by weight on a dry weight basis.

Fats suitable for use in the liquid concentrates of the present invention may include coconut oil, soy oil, corn oil, olive oil, safflower oil, high oleic safflower oil, MCT oil (medium chain triglycerides), sunflower oil, high oleic sunflower oil, structured triglycerides, palm and palm kernel oils, palm olein, canola oil, marine oils, cottonseed oils, and combinations thereof.

Suitable fats for use in the liquid concentrates includes emulsifiers to help the various fortifier components readily disperse when combined with human milk. Non-limiting examples of suitable emulsifiers include soya bean lecithin, polyoxythylene stearate, polyoxyethylene sorbitan mono-oleate, polyoxyethylene sorbitan monopalmitate, polyoxyethylene sorbitan monostearate, ammonium phosphatides, polyoxyethylene sorbitan monolaurate, citric acid esters of mono and diglycerides of fatty acids, tartaric acid esters of mono and diglycerides of fatty acids, and combinations thereof. Natural soy lecithin is especially useful in this respect.

The fat component of the liquid concentrate may therefore include any emulsifier suitable for use in infant nutritional products. Emulsifier concentrations in these products may range up to 10%, including from 1% to 10%, even more typically from 1.5% to 5%, by weight of the total fat component.

Another aspect of the present invention includes those in which the weight ratio of fat to protein in the concentrate is at least 0.9, including from I to 5, and also including from 2 to 4. These ratios are helpful in further stabilizing the liquid concentrates, especially those comprising a blend of casein and whey proteins as described herein.

The liquid concentrates of the present invention also includes those embodiments that comprise as part of the fat component one or more of arachidonic acid, docosahexaenoic acid, or combinations thereof, alone or in further combination with linoleic acid, linolenic acid, or both. These fats and their use in promoting infant development, especially preterm infant development, are described in U.S. Patent 6,495,599 (Auestad et al.).

### II. Calcium

The liquid concentrates of the present invention include calcium-fortified embodiments wherein at least 50% by weight of the calcium is water-insoluble or otherwise insoluble within the selected concentrate formula. The insoluble calcium component preferably represents from 50% to 100%, including from 80% to 100%, and also including from 90% to 99%, by weight of the total calcium in the selected concentrate.

In this context, the term "water-insoluble" refers to those calcium-containing materials or compounds having a solubility in 32°C water typically less than 0.1 g/ml, including less than 0.01 g/ml, or other calcium-containing materials or compounds that are otherwise rendered similarly insoluble within the selected liquid concentrate.

Non-limiting examples of suitable insoluble calcium sources suitable for use in the liquid concentrate include calcium phosphate dibasic, calcium phosphate tribasic and calcium carbonate, calcium citrate, and combinations thereof. Alternatively, the insoluble calcium source can be in the form of a colloidal suspension with the protein component, e.g., calcium caseinate. It is understood, however, that water-soluble calcium sources such as calcium chloride or other water-soluble materials can be used in these calcium-fortified embodiments, but that such water-soluble materials are preferably rendered insoluble within the selected liquid concentrate.

### III. Vitamins and minerals

The liquid concentrate of the present invention may further comprise any of a variety of vitamins, non-limiting examples of which include vitamin A, vitamin D, vitamin E, vitamin K, thiamine, riboflavin, pyridoxine, vitamin B₁₂, niacin, folic acid, pantothenic acid, biotin, vitamin C, choline, inositol, salts and derivatives thereof, and combinations thereof.

The liquid concentrates may also further comprise any of a variety of minerals known or otherwise suitable for us in infant or other nutritional formulas, non-limiting examples of which include phosphorus, magnesium, calcium as described hereinbefore, zinc, manganese, copper, iodine, sodium, potassium, chloride, selenium, and combinations thereof.

The liquid concentrates of the present invention includes those embodiments comprising per 100 kcal of fortifier solids one or more of the following: vitamin A (from

250 to 750 IU), vitamin D (from 40 to 100 IU), vitamin K (greater than 4 µm), vitamin E (at least 0.3 IU), vitamin C (at least 8 mg), thiamine (at least 8 µg), vitamin B₁₂ (at least 0.15 µg), niacin (at least 250 µg), folic acid (at least 4 µg), pantothenic acid (at least 300 µg), biotin (at least 1.5 µg), choline (at least 7 mg), and inositol (at least 2 mg),

The liquid embodiments of the present invention also include those embodiments comprising per 100 kcal of the fortifier solids one or more of the following: calcium (at least 50 mg), phosphorus (at least 25 mg), magnesium (at least 6 mg), iodine (at least 5 µg), zinc (at least 0.5 mg), copper (at least 60 µg), manganese (at least 5 µg), sodium (from 20 to 60 mg), potassium (from 80 to 200 mg), chloride (from 55 to 150 mg) and selenium (at least 0.5 mcg),

### IV. Other Optional Ingredients

The liquid concentrates of the present invention may further comprise other optional ingredients that may modify the physical, chemical, aesthetic or processing characteristics of the formulas or serve as pharmaceutical or additional nutritional components when used in the targeted population. Many such optional ingredients are known for use in food and nutritional products, including infant formulas, and may also be used in the liquid concentrates of the present invention, provided that such optional materials are compatible with the essential materials described herein, are safe and effective for their intended use, and do not otherwise unduly impair product performance.

Non-limiting examples of such optional ingredients include preservatives, antioxidants, various pharmaceuticals, buffers, carotenoids, colorants, flavors, nucleotides and nucleosides, thickening agents, stabilizers, prebiotics, probiotics, sialic acid-containing materials, and other excipients or processing aids.

### V. Product Form

The human milk fortifier of the present invention is formulated as a concentrated liquid having a caloric density of at least 1.25 kcal/ml (37 kcal/fl oz) to 6.0 Kcal/ml, including from 1.4 kcal/ml (42 kcal/fl oz) to 5 kcal/ml (149 kcal/fl oz), and also including from 1.5 kcal/ml (44 kcal/fl oz) to 2.5 kcal/ml (74 kcal/fl oz), and also including from 1.9 kcal/ml (56 kcal/fl oz) to 2.0 kcal/ml (59 kcal/fl oz).

The liquid concentrates of the present invention include packaged compositions further comprising a suitable unit dose package or container. These unit dose packages are single use containers that alone, or in combination with other unit dose package, provide sufficient human milk fortifier to supplement human milk for immediate use, e.g., preferably within 8-24 hours, more preferably within 0-3 hours, of mixing with human milk.

The amount or volume of concentrated liquid in each unit dose package includes those embodiments in which the package contains an amount suitable to prepare an infants' next feeding. These unit dose packages typically contain sufficient concentrate to provide from 0.5g to 10 g of fortifier solids, more typically from 0.8 g to 5.0 g of fortifies solids, and even more typically from 0.85 g to 2.0 g, of fortifier solids

The liquid concentrate of the present invention is preferably formulated so as to provide fortified human milk having an osmolality of less than 400 mOsm/kg water, preferably from 300 mOsm/kg water to 400 mOsm/kg water. One skilled in the art can readily formulate the human milk fortifies with the appropriate carbohydrate sources and corresponding DE (dextrose equivalence) values to obtain or otherwise provide for the targeted osmolality of the human milk fortifier when combined with human milk.

The term "unit dose" as used herein refers to individual, single-use, packages of human milk fortifier containing an amount of human milk fortifier that can be used in a preparation of an infant feeding. The amount of fortified human milk prepared for a premature infant, for example, typically ranges from 25 ml to 150 ml a day. Consequently, a single unit dose is the appropriate amount of fortifier solids to fortify a 25 ml preparation. Multiple packages can be used to prepare larger feeding volumes, especially for term infants.

### VI. Aseptic packaging

The aseptically packaged embodiments of the present invention can be prepared or manufactured using any of a variety of techniques well known to those of ordinary skill in the fomulation art For example, a typical process involves the preparation of a slurry from one or more fluid combinations that may contain water and one or more of the following: Carbohydrates, extensively hydrolyzed protein, lipids, stabilizers, vitamins and minerals. This sluny is typically emulsified, deaerated, homogenized and cooled to form a sterilized formula, and then aseptically packaged to form a sterilized, aseptically packaged liquid nutritional formula. Various other solutions may be added to the slurry at most any time before, during, or after processing.

Suitable aseptic packaging techniques include any of the well known aseptic packaging methods disclosed in the formulation arts for preparing liquid nutritional formula, all of which are generally directed to the sealing or filling of a sterilized liquid into a sterilized, air-tight container. Many variations on the basic method exist and are well known to those of ordinary skill in the formulation art, non-limiting examples of which are described in U.S. Patent 6,096,358 (Murdick et al.); U.S. Patent 6,227,261 (Das et a.); and U.S. Patent 6,371,319 (Yeaton et al.).

The aseptically packaged embodiments of the present invention may include any container or package suitable for use with liquid nutritional products and also capable of withstanding aseptic processing conditions (e.g., sterilization). Non-limiting examples of such containers include single or multi use bags, plastic bottles or containers, pouches, metal cans glass bottles, foil or other flexible pouches, syringes, vials, or any other container meeting the above-described criteria.

The aseptically packaged container for these embodiments is typically sterilized prior to being filled with its sterilized contents. The container is most typically sterilized by the application of hydrogen peroxide or other suitable disinfectant to the inside surface of the container. The hydrogen peroxide or other disinfectant is often applied in an atomized mist After a disinfectant is applied, the container may be transported along a conveyor system during which time the container may be subjected to one or more sprayings of hot sterilized air, preferably hot, sterilized, dry air. The container is then preferably injected with nitrogen gas. The aseptically prepared container is then aseptically filled with sterilized product and sealed.

A liquid concentrate embodiment of the present invention that is to be packaged aseptically may be prepared in the same or substantially the same way as a product that is to be retort packaged, but for the final packaging preparation sequence. In other words, once a liquid concentrate is formulated, it will only then be treated differently in preparation for the packaging process, depending upon the selection of retort or aseptic packaging. For aseptic packaging, the concentrate is typically further heat treated to a temperature of from 160°F to 185°F as a preheating step, subjected to ultra high temperature treatment in the range of from 280° to 300°F for from 5 to 15 seconds, to sufficiently reduce the bioburden to allow the products to maintain safe levels, i.e., commercially sterile, over an extended shelf life of the finished product exceeding 12 months. The treated formula is then homogenized at 1000 psi or higher and aseptically packaged.

It has been found that aseptically packaged embodiments of the present invention have a significantly lighter color or hue as compared to retort packaged embodiments hereof. Aseptically packaged embodiment are preferred.

### VII. Method of Manufacture

The concentrated human milk fortifier compositions of the present invention may be prepared in accordance with the methods described hereinafter, which methods are described in association with the exemplified embodiments (see Examples).

The liquid concentrate may be packaged and stored in unit dose packages, although the concentrates may also be packaged in any container system known or otherwise suitable for use with infant liquid nutritional products. Preferred are unit dose packages, many of which are suitable for use herein, non-limiting examples of which include syringes, sachets, ampules, or other container suitably for direct delivery of the liquid concentrate to human milk or infant formula. These unit dose packages include those having a partial or completely opaque or translucent character for limiting light exposure of the liquid concentrate during prolonged storage and prior to use.

### VIII. Use

The liquid concentrate of the present invention is used only in combination with human milk or other suitable infant formula, wherein the resulting fortified human milk or infant formula has an osmolality suitable for oral administration to an infant, which most typically will bis less than 400 mOsm/kg water, more typically from 300 mOsm/kg water to 400 mOsm/kg water.

The liquid concentrate of the present invention may be added directly to human milk in a volume to volume ratio of from 1:3 to 1:9, including from 1:3.5 to 1:7, and also including from 1.4 to 1:6. The ratio is ultimately selected based primarily upon the ingredients and osmolality of the selected liquid concentrate, all in view of the particular nutritional needs of the infant. The liquid concentrate may be added directly to every feeding or to a sufficient number of feedings (e.g., once or twice daily) to provide optimal nutrition in view of the particular nutritional needs of the infant.

Human milk or other infant formula, after fortification with the liquid concentrate of the present invention, will most typically have a caloric density ranging from 19 kcal/ fl oz (0.64 kcal/ml) to 24 kcal/ft oz (0.81 kcal/ml), with the 22-24 kcal/fl oz formulations (0.74-0.91 kcal/ml) being more useful in preterm infants, and the 19-21 kcal/fl oz (0.64-0.71 kcal/ml) formulations more useful for term infants.

The uses of the present invention therefore allow to provide nutrition to infants, especially preterm infants, said use comprising the addition of the composition of the present invention to human milk or other infant feeding composition, followed by the administration of the fortified human milk or feeding composition to the infant.

Also disclosed is a use for reducing the risk of microbial contamination, including *Enterobacter sakazakii* contamination, of term or preterm infant feeding compositions, said use comprising the direct addition of the compositions of the present invention to human milk or other infant feeding composition followed by the administration of the fortified composition to the infant

### EXAMPLES

The following Examples illustrate specific embodiments of the compositions of the present invention, including methods of making the compositions, and methods of using the compositions to provide nutrition to infants.

Each of the exemplified concentrates comprises from 15-45% by weight of protein, on a dry weight basis, has a caloric density of 1.25-6.0 kcal/ml, and has a fat to protein weight ratio of at least 2:1.

Each of the exemplified concentrates also contains water-insoluble calcium that represents from 50% to 100%, by weight of the total calcium in the concentrate. Each also contains non-reducing carbohydrates, which represent from 800/ to 100% by weight of the total carbohydrate in the concentrate.

Examples 1-2 illustrate concentrated liquid embodiments of the present invention. Also included are corresponding methods of using the compositions in accordance with the methods of the present invention. The ingredients for each exemplified composition are described in the following table. All ingredient amounts are listed as kg per 1000 kg batch of product, unless otherwise specified.

### Example 1

The following example illustrates concentrates liquid embodiments of the present invention comprising a blend of casein and whey proteins, including both aseptically packaged and retort packaged embodiment.

**Bill of Materials: Concentrated Human Milk Fortifier Liquid**

| **Ingredient** | **Amount** | **Ingredient** | **Amount** |
|---|---|---|---|
| Sucrose | 125.5 | m-Inositol | 0.0698 |
| Milk protein isolate | 64.6 | Taurine | 0.0663 |
| Coconut oil | 30.2 | Niacinamide | 0.0582 |
| Whey protein concentrate | 24.4 | Vitamin A | 0.0494 |
| MCT Oil | 21.9 | Zinc Sulfate | 0.0461 |
| Soy Oil | 21.9 | Calcium pantothenate | 0.0286 |
| Tricalcium phosphate | 14.4 | Ferrous sulfate | 0.0136 |
| Potassium chloride | 5,18 | Cupric sulfate | 0.00836 |
| Calcium carbonate | 3.44 | Riboflavin | 0.00763 |
| Magnesium phosphate | 3.05 | Thiamine chloride HCL | 0.00507 |
| Potassium citrate | 1.32 | Pyridoxine HCL | 0.00459 |
| Docosahexaenoic acid oil | 0.903 | Folic acid | 0.000778 |
| Soy lecithin | 0.756 | manganese Sulfate | 0.000573 |
| Arachidonic acid oil | 0.729 | Biotin | 0.000507 |
| Dipotassium phosphate | 0.596 | Vitamin K | 0.000835 |
| Monopotassium phosphate | 0.466 | Vitamin D3 | 0.000235 |
| Vitamin E | 0.357 | Sodium selenate | 0.0000491 |
| Sodium chloride | 0.170 | Potassium iodide | 0.0000105 |
| KOH 5% solution | Q.S. | Cyanocobalamin | 0.0000103 |
| Water | Q.S. | | |

The ingredients listed in the preceding table are combined and processed to form a concentrated human milk fortifier embodiment of the present invention. One method of preparing such an embodiment is described below.

An initial intermediate blend is prepared by heating to 32-37°C the specified amounts of coconut oil, MCT oil, soy oil, DHA oil and AA oil, all with agitation. A soy lecithin emulsifier is added with agitation to the heated blend and allowed to dissolve. Vitamins A, D, and K, and Natural Vitamin E are then added with agitation to the developing blend. Milk protein isolate (25.8 kg) and the specified amounts of ultra micronized tricalcium phosphate and calcium carbonate are added to the blend. The resulting intermediate blend is maintained at 26-48°C under moderate agitation for a period of time not to exceed six hours before being added to the aqueous protein blend described below.

An aqueous protein blend is then prepared by heating 573 kg of ingredient water at 48-60°C, and then adding to it with agitation milk protein isolate (38.8 kg) and the specified amount of whey protein concentrate. Thereafter, and with agitation, the entire intermediate blend described above is added to the aqueous protein blend. The following ingredients are then added to the resulting blend in the following order: potassium citrate, dipotassium phosphate, monopotassium phosphate, magnesium phosphate, sodium chloride, potassium chloride, potassium iodide and sucrose. After no less than five minutes, the blend pH is adjusted to 6.60-6.80 using a 1N KOH solution, and thereafter maintained at 51-60°C, for a period of time not to exceed two hours before further processing.

The pH adjusted blend is then homogenized using one or more in-line homogenizers at pressures from 1000-4000 psig with or without a second stage homogenization from 100-500 psig followed by heat treatment using a HTST (high temperature short time, 74°C for 16 seconds) or UHTST (ultra-high temperature short time, 132-154°C for 5-15 seconds) process. The choice of UHTST or HTST is normally made based upon a review of the bioburden of each of the ingredients in the formulation. After the appropriate heat treatment, the batch is cooled in a plate cooler to 1.0-5.0°C and then transferred to a refrigerated holding tank, where it is subjected to analytical testing and then standardized to finished product specifications, which includes the addition of an ascorbic acid solution and a water-soluble vitamin and trace mineral solution, all of which is prepared separately before adding to the previously described refrigerated batch.

The ascorbic acid solution is prepared by adding the specified amount of ascorbic acid to 11.1 kg of 1N KOH solution with agitation. The water-soluble vitamin and trace mineral solution is prepared by heating 25.2 kg of ingredient water to 37°C to 48°C. The water soluble vitamins and trace minerals are added to the water as a premix which contains m-inositol, taurine, niacinamide, zinc sulfate, calcium pantothenate, ferrous sulfate, cupric sulfate, riboflavin, thiamine hydrochloride, pyridoxine hydrochloride, folic acid, manganese sulfate, biotin, sodium selenate, and cyanocobalamin. As noted above, both solutions are then added to the refrigerated batch, all with agitation. As part of batch standardization, the appropriate amount of ingredient dilution water is then added to the batch for a target total solids level of 31%, and the pH adjusted to 7.1 with a 1N KOH solution. The batch is filled into suitably sized containers containing 5 ml of product.

Commercial sterility of the final packaged product is obtained through either terminal sterilization, or through UHTST heat treatment followed by aseptically filling in any acceptable unit dose or multi-dose package. Unit dose packages can either be terminally sterilized or aseptically filled.

Unit dose packages include pouches, sachets, vials, syringes, and form-fill-seal packages like creamer cups. Pouches and sachets may be constructed, for example, of plastic film, aluminum foil, aluminum foil/paper laminates, paper/aluminum foil laminates, paper/plastic laminates or combinations thereof. Vials and syringes for terminal sterilization may be constructed, for example, of various proprietary plastics that maintain their dimensional integrity during heating, some examples of which include TopPac® plastic vials supplied by Schott Pharmaceutical Packaging, Daikyo Resin CZ® vials supplied in the US by West Pharmaceutical Company, and proprietary resin vials supplied by Hospira Inc. Aseptic Form-fill-seal packages like creamer cups may be constructed using various plastic laminates well known to those in the field to achieve the oxygen and moisture barrier properties desired.

### Example 2

The following example illustrates concentrated liquid embodiments of the present invention comprising a blend of protein hydrolysates, including both aseptically packaged and retort packaged embodiments.

**Bill of Materials: Concentrated Human Milk Fortifier Liquid**

| Ingredient | Amount | Ingredient | Amount |
|---|---|---|---|
| Sucrose | 116.3 | m-Inositol | 0.0698 |
| Casein protein hydrolysate | 56.5 | Taurine | 0.0663 |
| Whey protein hydrolysate | 43.0 | Niacinamide | 0.0582 |
| Coconut oil | 30.2 | Vitamin A | 0.0494 |
| MCT Oil | 21.9 | Zinc sulfate | 0.0461 |
| Soy Oil | 21.9 | Calcium pantothenate | 0.0286 |
| Tricalcium phosphate | 14.4 | Ferrous sulfate | 0.0136 |
| Potassium chloride | 5.18 | Cupric sulfate | 0.00836 |
| Calcium carbonate | 3.44 | Riboflavin | 0.00763 |
| Magnesium phosphate | 3.05 | Thiamine chloride hydrochloride | 0.00507 |
| Potassium citrate | 1.32 | Pyridoxine hydrochloride | 0.00459 |
| Docosahexaenoic oil | 0.903 | Folic acid | 0.000778 |
| Soy lecithin | 0.756 | Manganese Sulfate | 0.000573 |
| Arachidonic acid oil | 0.729 | Biotin | 0.000507 |
| Dipotassium phosphate | 0.596 | Vitamin K | 0.000835 |
| Monopotassium phosphate | 0.466 | Vitamin D3 | 0.000235 |
| Vitamin E | 0.357 | Sodium selenate | 0.0000491 |
| Sodium chloride | 0.170 | Potassium iodide | 0.0000105 |
| KOH 5% solution | Q.S. | Cyanocobalamin | 0.0000103 |
| Water | Q.S. | | |

The ingredients listed in the preceding table are combined and processed to form a concentrated human milk fortifier embodiment of the present invention. One method of preparing such an embodiment is described below.

An initial intermediate blend is prepared by heating to a temperature of 32-37°C the specified amounts of coconut oil, MCT oil, soy oil, DHA oil and AA oil, all with agitation. A soy lecithin emulsifier is added with agitation to the heated blend and allowed to dissolve. Vitamins A, D, and K, and Natural Vitamin E are then added with agitation to the developing blend. The specified amounts of whey protein hydrolysate, ultra micronized tricalcium phosphate and calcium carbonate are added to the blend. The resulting intermediate blend is maintained at 37-42°C under moderate agitation for a period of time not to exceed six hours before being added to a subsequent blend described below.

Another blend is then prepared by heating 573 kg of ingredient water at 48-60°C, and then adding the following ingredients, in order, potassium citrate, dipotassium phosphate, monopotassium phosphate, magnesium phosphate, sodium chloride, potassium chloride, potassium iodide and sucrose. With agitation, the specified amount of casein protein hydrolysate is added to the blend, and thereafter to the blend is added the intermediate blend described above. After no less than five minutes, the formed blend pH is adjusted to 6.60-6.80 using a 1N KOH solution, and thereafter maintained at 50-60°C, for a period of time not to exceed two hours before further processing.

The pH-adjusted blend is then homogenized using one or more in-line homogenizers at pressures from 1000-4000 psig with or without a second stage homogenization from 100-500 psig followed by heat treatment using a HTST (high temperature short time, 74°C for 16 seconds) or UHTST (ultra-high temperature short time, 132-154°C for 5-15 seconds) process. The choice of UHTST or HTST is normally made based upon a review of the bioburden of each of the ingredients in the formulation. After the appropriate heat treatment, the batch is cooled in a plate cooler to 1.0-5.0°C and then transferred to a refrigerated holding tank, where it is subjected to analytical testing and then standardized to finished product specifications, which includes the addition of an ascorbic acid solution and a water-soluble vitamin and trace mineral solution, all of which is prepared separately before adding to the previously described refrigerated batch.

The ascorbic acid solution is prepared by adding the specified amount of ascorbic acid to 11.1 kg of 1N KOH solution with agitation. The water-soluble vitamin and trace mineral solution is prepared by heating 25.2 kg of ingredient water to 37°C to 48°C. The water soluble vitamins and trace minerals are added to the water as a premix which contains m-inositol, taurine, niacinamide, zinc sulfate, calcium pantothenate, ferrous sulfate, cupric sulfate, riboflavin, thiamine hydrochloride, pyridoxine hydrochloride, folic acid, manganese sulfate, biotin, sodium selenate, and cyanocobalamin. As noted above, both solutions are then added to the refrigerated batch, all with agitation. As part of batch standardization, the appropriate amount of ingredient dilution water is then added to the batch for a target total solids level of 31%, and the pH adjusted to 7.1 with a 1N KOH solution. The batch is filled into suitably sized containers containing 5 ml of product.

Commercial sterility of the final packaged product is obtained through either terminal sterilization, or through UHTST heat treatment followed by aseptically filling in any acceptable unit dose or multi-dose package. Unit dose packages can either be terminally sterilized or aseptically filled.

Unit dose packages include pouches, sachets, vials, syringes, and form-fill-seal packages like creamer cups. Pouches and sachets may be constructed, for example, of plastic film, aluminum foil, aluminum foil/paper laminates, paper/aluminum foil laminates, paper/plastic laminates or combinations thereof. Vials and syringes for terminal sterilization may be constructed, for example, of various proprietary plastics that maintain their dimensional integrity during heating, some examples of which include TopPac® plastic vials supplied by Schott Pharmaceutical Packaging, Daikyo Resin CZ® vials supplied in the US by West Pharmaceutical Company, and proprietary resin vials supplied by Hospira Inc. Aseptic Form-fill-seal packages like creamer cups may be constructed using various plastic laminates well known to those in the field to achieve the oxygen and moisture barrier properties desired.

### Exemplified Use

Each of the exemplified compositions, as 5 ml unit dose concentrates, is added directly to about 20 ml of human milk, in a volume-volume ratio of concentrate to human milk of from 1:3 to 1:9, to provide fortified human milk with an osmolality of between 300 and 400 mosmols/liter. The fortified human milk is then administered as a single feeding for an infant, especially a preterm infant, to thus provide the infant with optimal nutrition from a feeding comprising human milk and human milk fortifier.

### Color Data

Compositions similar to those described in Example 1 are evaluated for color performance after either aseptic or retort processing. Higher Agtron scores mean lighter product color. The data show that the aseptic embodiments of the present invention result in lighter colored product relative to the retort formulations.

| **Concentrated Liquid Human Milk Fortifier** | | | | |
|---|---|---|---|---|
| Process | Aseptic | Retort | Aseptic* | Retort* |
| Container | Plastic 32 oz | Plastic 2 oz | Plastic 32 oz | Plastic 2 oz |
| Code | 6-2A | 6-2T | 6-5A | 6-5T |
| Agtron Color | 52.7 | 38.2 | 52.0 | 36.7 |

| | | | | |
|---|---|---|---|---|
| * carrageenan added for viscosity | | | | |

## Claims

1. A liquid human milk fortifier composition comprising from 15% to 45% by weight of protein, on a dry weight basis, and having a caloric density of from 1.25 kcal/ml to 6.0 kcal/ml, wherein the liquid composition is intended to be added to human milk in a volume-volume ratio of from 1:3 to 1:9.

2. The composition of claim 1 further comprising, on a dry weight basis, from 19% to 41 % fat and from 14% to 59% carbohydrate, wherein the fat to protein weight ratio is at least 0.9.

3. The composition of claim 2 wherein the protein includes from 30% to 50% by weight of whey protein and from 50% to 70% by weight of casein protein and the composition is a retort packaged liquid.

4. The composition of claim 3 wherein the composition comprises from 20% to 40% by weight of protein, on a dry weight basis, wherein the protein includes from 28% to 39% by weight of whey protein and from 61 % to 72% by weight of casein protein.

5. The composition of claim 2 wherein the protein includes from 10% to 100% by weight of hydrolyzed protein.

6. The composition of claim 5 wherein the protein includes from 80% to 100% by weight of hydrolyzed protein.

7. The composition of claim 2 wherein the composition is an aseptically packaged liquid.

8. The composition of claim 2 wherein the composition comprises:
(A) from 20% to 40% by weight of protein, on a dry weight basis,
(B) from 10% to 50% by weight of carbohydrate, on a dry weight basis, and
(C) from 15% to 37% by weight of fat, on a dry weight basis.

9. The composition of claim 2 further comprising:
a calcium-containing material that includes from 50% to 100% water- insoluble calcium by weight of total calcium in the composition.

10. The composition of claim 9 wherein the water-insoluble calcium represents 100% by weight of the calcium-containing material.

11. The composition of claim 9 wherein the calcium-containing material is selected from the group consisting of calcium phosphate dibasic, calcium phosphate tribasic, calcium carbonate, calcium citrate, and combinations thereof

12. The composition of claim 9 wherein the carbohydrate comprises from 80% to 100% by weight of a non-reducing carbohydrate.

13. The composition of claim 12 wherein the non-reducing carbohydrate comprises a monosaccharide, wherein from 50% to 100% by weight of the monosaccharide is sucrose.

14. The composition according to any of claims 1, 3, 5, 8, or 9 wherein the caloric density ranges from 1.4 kcal/ml to 2.5 kcal/ml.

15. The composition according to any of claims 1 or 12 wherein the liquid concentrate is intended to be added to human milk in a volume-volume ratio of from 1:4 to 1:7.

16. The composition according to any of claims 1, 6, or 9 wherein the composition comprises from 20% to 35% by weight of protein, on a dry weight basis.

17. The composition according to any of claims 2, 3, or 8 wherein the fat to protein ratio is from 2 to 5.

18. Use of from 15% to 45% by weight of protein, on a dry weight basis, and having a caloric density of from 1.25 kcal/ml to 6.0 kcal/ml for the manufacture of a liquid human milk fortifier composition for providing nutrition to preterm infants by addition of said composition to human milk in a volume-volume ratio of from 1:3 to 1:9 and by administration of the fortified human milk to the preterm infant.

19. Use of from 15% to 45% by weight of protein, on a dry weight basis, and having a caloric density of from 1.25 kcal/ml to 6.0 kcal/ml for the manufacture of a liquid human, milk fortifier composition for reducing the risk of microbial contamination of preterm infant feeding compositions by direct addition of said composition to a preterm infant feeding composition in a volume-volume ratio of from 1:3 to 1:9 followed by administration of the fortified composition to the infant.

20. The use of claim 19 wherein the preterm infant feeding composition is human milk.

21. Use of from 15% to 45% by weight of protein, on a dry weight basis, and having a caloric density of from 1.25 kcal/ml to 6.0 kcal/nal for the manufacture of a liquid human milk fortifies composition for reducing the risk of *Enterobacter sakazakii* contamination of preterm infant feeding compositions by direct addition of said composition to a preterm infant feeding composition in a volume-volume ratio of from 1:3 to 1:9 followed by administration of the fortified composition to the preterm infant.

22. The use of claim 21 wherein the preterm infant feeding composition is human milk.

## Patentansprüche

1. Eine flüssige Zusammensetzung zum Anreichern von Humanmilch, die von 15 Gewichtsprozent bis 45 Gewichtsprozent Protein, auf Trockengewichtsgrundlage, umfasst und eine Kaloriendichte von 1,25 kcal/ml bis 6,0 kcal/ml hat, worin beabsichtigt ist, dass die flüssige Zusammensetzung zur Humanmilch in einem Volumen-Volumen-Verhältnis von 1:3 bis 1:9 hinzugefügt wird.

2. Die Zusammensetzung gemäß Anspruch 1, die weiter, auf Trockengewichtsgrundlage, von 19% bis 41% Fett und von 14% bis 59% Kohlenhydrat umfasst, worin das Gewichtsverhältnis von Fett zu Protein mindestens 0,9 ist.

3. Die Zusammensetzung gemäß Anspruch 2, worin das Protein von 30 Gewichtsprozent bis 50 Gewichtsprozent Molkenprotein und von 50 Gewichtsprozent bis 70 Gewichtsprozent Kaseinprotein einschließt und die Zusammensetzung eine Retorten-verpackte Flüssigkeit ist.

4. Die Zusammensetzung gemäß Anspruch 3, worin die Zusammensetzung von 20 Gewichtsprozent bis 40 Gewichtsprozent Protein, auf Trockengewichtsgrundlage, umfasst, worin das Protein von 28 Gewichtsprozent bis 39 Gewichtsprozent Molkenprotein und von 61 Gewichtsprozent bis 72 Gewichtsprozent Kaseinprotein einschließt.

5. Die Zusammensetzung gemäß Anspruch 2, worin das Protein von 10 Gewichtsprozent bis 100 Gewichtsprozent hydrolysiertes Protein einschließt.

6. Die Zusammensetzung gemäß Anspruch 5, worin das Protein von 80 Gewichtsprozent bis 100 Gewichtsprozent hydrolysiertes Protein einschließt.

7. Die Zusammensetzung gemäß Anspruch 2, worin die Zusammensetzung eine aseptisch verpackte Flüssigkeit ist.

8. Die Zusammensetzung gemäß Anspruch 2, worin die Zusammensetzung Folgendes umfasst:
(A) von 20 Gewichtsprozent bis 40 Gewichtsprozent Protein, auf Trockengewichtsgrundlage,
(B) von 10 Gewichtsprozent bis 50 Gewichtsprozent Kohlenhydrat, auf Trockengewichtsgrundlage, und
(C) von 15 Gewichtsprozent bis 37 Gewichtsprozent Fett, auf Trockengewichtsgrundlage.

9. Die Zusammensetzung gemäß Anspruch 2, die weiter Folgendes umfasst:
ein Kalzium enthaltendes Material, das von 50 Gewichtsprozent bis 100 Gewichtsprozent wasserunlösliches Kalzium von Gesamt-Kalzium in der Zusammensetzung einschließt.

10. Die Zusammensetzung gemäß Anspruch 9, worin das wasserunlösliche Kalzium 100 Gewichtsprozent des Kalzium enthaltenden Materials darstellt.

11. Die Zusammensetzung gemäß Anspruch 9, worin das Kalzium enthaltende Material gewählt ist aus der Gruppe bestehend aus Dikalziumphosphat, Trikalziumphosphat, Kalziumkarbonat, Kalziumcitrat und Kombinationen davon.

12. Die Zusammensetzung gemäß Anspruch 9, worin das Kohlenhydrat von 80 Gewichtsprozent bis 100 Gewichtsprozent eines nichtreduzierenden Kohlenhydrats umfasst.

13. Die Zusammensetzung gemäß Anspruch 12, worin das nichtreduzierende Kohlenhydrat ein Monosaccharid umfasst, worin von 50 Gewichtsprozent bis 100 Gewichtsprozent des Monosaccharids Saccharose sind.

14. Die Zusammensetzung gemäß einem beliebigen der Ansprüche 1, 3, 5, 8 oder 9, worin die Kaloriendichte in einem Bereich von 1,4 kcal/ml bis 2,5 kcal/ml liegt.

15. Die Zusammensetzung gemäß einem beliebigen der Ansprüche 1 oder 12, worin das Flüssigkonzentrat dazu bestimmt ist, zu Humanmilch in einem Volumen-Volumen-Verhältnis von 1:4 bis 1:7 hinzugefügt zu werden.

16. Die Zusammensetzung gemäß einem beliebigen der Ansprüche 1, 6 oder 9, worin die Zusammensetzung von 20 Gewichtsprozent bis 35 Gewichtsprozent Protein, auf Trockengewichtsgrundlage, umfasst.

17. Die Zusammensetzung gemäß einem beliebigen der Ansprüche 2, 3 oder 8, worin das Verhältnis von Fett zu Protein 2 bis 5 beträgt.

18. Verwendung von von 15 Gewichtsprozent bis 45 Gewichtsprozent Protein, auf Trockengewichtsgrundlage, das eine Kaloriendichte von 1,25 kcal/ml bis 6,0 kcal/ml hat, zur Herstellung einer flüssigen Zusammensetzung zum Anreichern von Humanmilch, um frühgeborene Kinder zu ernähren, durch Zugabe der Zusammensetzung zu Humanmilch in einem Volumen-Volumen-Verhältnis von 1:3 bis 1:9 und durch Verabreichung der angereicherten Humanmilch an das frühgeborene Kind.

19. Verwendung von 15 Gewichtsprozent bis 45 Gewichtsprozent Protein, auf Trockengewichtsgrundlage, das eine Kaloriendichte von 1,25 kcal/ml bis 6,0 kcal/ml hat, zur Herstellung einer flüssigen Zusammensetzung zum Anreichern von Humanmilch, um das Risiko mikrobieller Kontamination von Ernährungszusammensetzungen für frühgeborene Kinder zu verringern, durch direkte Zugabe der Zusammensetzung zu einer Ernährungszusammensetzung für frühgeborene Kinder in einem Volumen-Volumen-Verhältnis von 1:3 bis 1:9, gefolgt von Verabreichung der angereicherten Zusammensetzung an das Kind.

20. Die Verwendung gemäß Anspruch 19, worin die Ernährungszusammensetzung für frühgeborene Kinder Humanmilch ist.

21. Verwendung von 15 Gewichtsprozent bis 45 Gewichtsprozent Protein, auf Trockengewichtsgrundlage, das eine Kaloriendichte von 1,25 kcal/ml bis 6,0 kcal/ml hat, zur Herstellung einer flüssigen Zusammensetzung zum Anreichern von Humanmilch, um das Risiko einer *Enterobacter* sakazakii-Kontamination von Ernährungszusammensetzungen für frühgeborene Kinder zu verringern, durch direkte Zugabe der Zusammensetzung zu einer Ernährungszusammensetzung für frühgeborene Kinder in einem Volumen-Volumen-Verhältnis von 1:3 bis 1:9, gefolgt von Verabreichung der angereicherten Zusammensetzung an das frühgeborene Kind.

22. Die Verwendung gemäß Anspruch 21, worin die Ernährungszusammensetzung für frühgeborene Kinder Humanmilch ist.

## Revendications

1. Composition de fortifiant pour lait humain liquide comprenant de 15 % à 45 % en masse de protéine, sur une base de masse sèche, et présentant une densité calorique de 1,25 kcal/ml à 6,0 kcal/ml, dans laquelle la composition liquide est destinée à être ajoutée à du lait humain dans un rapport volume-volume de 1:3 à 1:9.

2. Composition selon la revendication 1 comprenant de plus, sur une base de masse sèche, de 19 % à 41 % de graisse et de 14 % à 59 % d'hydrate de carbone, dans laquelle le rapport massique graisse à protéine est d'au moins 0,9.

3. Composition selon la revendication 2, dans laquelle la protéine comprend de 30 % à 50 % en masse de protéine de blé et de 50 % à 70 % en masse de protéine de caséine et la composition est un liquide emballé en poche de cornue.

4. Composition selon la revendication 3, dans laquelle la composition comprend de 20 % à 40 % en masse de protéine, sur une base de masse sèche, dans laquelle la protéine comprend de 28 % à 39 % en masse de protéine de blé et de 61 % à 72 % en masse de protéine de caséine.

5. Composition selon la revendication 2, dans laquelle la protéine comprend de 10 % à 100 % en masse de protéine hydrolysée.

6. Composition selon la revendication 5, dans laquelle la protéine comprend de 80 % à 100 % en masse de protéine hydrolysée.

7. Composition selon la revendication 2, dans laquelle la composition est un liquide emballé de manière aseptique.

8. Composition selon la revendication 2, dans laquelle la composition comprend :
(A) de 20 % à 40 % en masse de protéine, sur une base de masse sèche,
(B) de 10 % à 50 % en masse d'hydrate de carbone, sur une base de masse sèche, et
(C) de 15 % à 37 % en masse de graisse, sur une base de masse sèche.

9. Composition selon la revendication 2 comprenant de plus :
un matériau contenant du calcium qui comprend de 50 % à 100 % de calcium insoluble dans l'eau en masse de calcium total dans la composition.

10. Composition selon la revendication 9, dans laquelle le calcium insoluble dans l'eau représente 100 % en masse du matériau contenant du calcium.

11. Composition selon la revendication 9, dans laquelle le matériau contenant du calcium est choisi dans le groupe constitué de phosphate de calcium dibasique, de phosphate de calcium tribasique, de carbonate de calcium, de citrate de calcium et de combinaisons de ceux-ci.

12. Composition selon la revendication 9, dans laquelle l'hydrate de carbone comprend de 80 % à 100 % en masse d'un hydrate de carbone non réducteur.

13. Composition selon la revendication 12, dans laquelle l'hydrate de carbone non réducteur comprend un monosaccharide, dans laquelle de 50 % à 100 % en masse du monosaccharide sont du saccharose.

14. Composition selon l'une quelconque des revendications 1, 3, 5, 8 ou 9, dans laquelle la densité calorique est de 1,4 kcal/ml à 2,5 kcal/ml.

15. Composition selon l'une quelconque des revendications 1 à 12, dans laquelle le concentré liquide est destiné à être ajouté à du lait humain dans un rapport volume-volume de 1:4 à 1:7.

16. Composition selon l'une quelconque des revendications 1, 6 ou 9, dans laquelle la composition comprend de 20 % à 35 % en masse de protéine, sur une base de masse sèche.

17. Composition selon l'une quelconque des revendications 2, 3 ou 8, dans laquelle le rapport graisse à protéine est de 2 à 5.

18. Utilisation de 15 % à 45 % en masse de protéine, sur une base de masse sèche, et présentant une densité calorique de 1,25 kcal/ml à 6,0 kcal/ml pour la fabrication d'une composition de fortifiant pour lait humain liquide destinée à la fourniture d'une nutrition à des enfants prématurés par l'addition de ladite composition au lait humain dans un rapport volume-volume de 1:3 à 1:9 et par l'administration du lait humain fortifié à l'enfant prématuré.

19. Utilisation de 15 % à 45 % en masse de protéine, sur une base de masse sèche, et présentant une densité calorique de 1,25 kcal/ml à 6,0 kcal/ml pour la fabrication d'une composition de fortifiant pour lait humain liquide destinée à réduire le risque de contamination microbienne de compositions alimentaires pour enfants prématurés par l'addition directe de ladite composition à une composition alimentaire pour enfants prématurés dans un rapport volume-volume de 1:3 à 1:9 suivie par l'administration de la composition fortifiée à l'enfant.

20. Utilisation selon la revendication 19, dans laquelle la composition alimentaire pour enfants prématurés est du lait humain.

21. Utilisation de 15 % à 45 % en masse de protéine, sur une base de masse sèche, et présentant une densité calorique de 1,25 kcal/ml à 6,0 kcal/ml pour la fabrication d'une composition de fortifiant pour lait humain liquide destinée à réduire le risque de contamination par *Enterobacter sakazakii* de compositions alimentaires pour enfants prématurés par l'addition directe de ladite composition à une composition alimentaire pour enfants prématurés dans un rapport volume-volume de 1:3 à 1:9 suivie par l'administration de la composition fortifiée à l'enfant prématuré.

22. Utilisation selon la revendication 21, dans laquelle la composition alimentaire pour enfants prématurés est du lait humain.
